# EUROPEAN PATENT APPLICATION

(11) **EP 4 451 594 A1**
(43) Date of publication of application: **23.10.2024**
(21) Application number: 21967642.6
(22) Date of filing: 15.12.2021
(51) Int. Cl.: H04L 5/00

(54) **POSITIONING METHOD AND APPARATUS**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2021/138524
(87) International publication number: WO 2023/108506

(57) **Abstract**

Disclosed in embodiments of the present disclosure is a positioning method, capable of being applied to the technical field of communications. The method executed by a core network device comprises: interacting with an access network device for the validity of an uplink positioning reference signal corresponding to a terminal device; and/or interacting with the terminal device for the validity of the uplink positioning reference signal by means of the access network device. Thus, a failure of obtaining positioning information can be avoided, and the reliability of positioning is further improved.

## Description

### TECHNICAL FIELD

The present disclosure relates to a field of communication technologies, and in particular, relates to a method and an apparatus for positioning.

### BACKGROUND

With continuous development of mobile communication, demand for mobile positioning services has been gradually increasing. In an uplink positioning scene, a network device usually configures an uplink positioning reference signal for a terminal device. At the same time, the terminal device can perform positioning based on the uplink positioning reference signal. However, this method has a problem of failing to obtain positioning information.

Therefore, how to provide a reliable method for positioning is an urgent problem to be solved at present.

### SUMMARY

Embodiments of the present disclosure provide a method and an apparatus for positioning that can perform reliable positioning according to validity of an uplink positioning reference signal.

In a first aspect, embodiments of the present disclosure provide a method for positioning. The method is performed by a core network device, and the method includes:
interacting with an access network device for validity of an uplink positioning reference signal corresponding to a terminal device; and/or, interacting with a terminal device for validity of an uplink positioning reference signal via an access network device.

In the present disclosure, the LMF can interact with the access network device and/or, the terminal device via the access network device and, for the validity of the uplink positioning reference signal corresponding to the terminal device. Therefore, the phenomenon of failure to obtain positioning information can be avoided, and the reliability of positioning is further improved.

In a second aspect, embodiments of the present disclosure provide a method for positioning. The method is performed by an access network device, and the method includes: interacting with a core network device for validity of an uplink positioning reference signal corresponding to a terminal device; and/or interacting with a terminal device for validity of an uplink positioning reference signal.

In the present disclosure, the access network device can interact with the core network device and/or the terminal device for the validity of the uplink positioning reference signal corresponding to the terminal device, so as to avoid the phenomenon of failure to obtain positioning information, and further improve the reliability of positioning.

In a third aspect, embodiments of the present disclosure provide a method for positioning. The method is performed by a terminal device, and the method includes: interacting with a network device for validity of an uplink positioning reference signal.

In the present disclosure, the terminal device can interact with the network device for the validity of the uplink positioning reference signal, thereby avoiding the phenomenon of failure to obtain positioning information, and further improving the reliability of positioning.

In a fourth aspect, embodiments of the present disclosure provide a communication apparatus, which, on a core network device side, includes:
a transceiving module, configured to interact with an access network device for validity of an uplink positioning reference signal; and/or interact with a terminal device for validity of an uplink positioning reference signal.

In a fifth aspect, embodiments of the present disclosure provide a communication apparatus, which, on a access network device side, includes:
a transceiving module, configured to interact with a core network device for validity of an uplink positioning reference signal corresponding to a terminal device; and/or interact with a terminal device for validity of an uplink positioning reference signal.

In a sixth aspect, embodiments of the present disclosure provide a communication apparatus, which, on a terminal device side, includes:
a transceiving module, configured to interact with a network device for validity of an uplink positioning reference signal.

In a seventh aspect, embodiments of the present disclosure provide a communication apparatus. The communication apparatus includes a processor, and when the processor invokes a computer program in a memory, it executes the method described in the first aspect above.

In an eighth aspect, embodiments of the present disclosure provide a communication apparatus. The communication apparatus includes a processor, and when the processor invokes a computer program in a memory, it executes the method described in the second aspect above.

In a ninth aspect, embodiments of the present disclosure provide a communication apparatus. The communication apparatus includes a processor, and when the processor invokes a computer program in a memory, it executes the method described in the third aspect above.

In a tenth aspect, embodiments of the present disclosure provide a communication apparatus. The communication apparatus includes a processor and a memory, and a computer program is stored in the memory; the processor executes the computer program stored in the memory, so that the communication apparatus executes the method described in the first aspect above.

In an eleventh aspect, embodiments of the present disclosure provide a communication apparatus. The communication apparatus includes a processor and a memory, and a computer program is stored in the memory; the processor executes the computer program stored in the memory, so that the communication apparatus execute the method described in the second aspect above.

In a twelfth aspect, embodiments of the present disclosure provide a communication apparatus. The communication apparatus includes a processor and a memory, and a computer program is stored in the memory; the processor executes the computer program stored in the memory, so that the communication apparatus execute the method described in the third aspect above.

In a thirteenth aspect, embodiments of the present disclosure provide a communication apparatus. The apparatus includes a processor and an interface circuit, the interface circuit is configured to receive code instructions and transmit the code instructions to the processor, and the processor is configured to run the code instructions to enable the apparatus to execute the method described in the first aspect above.

In a fourteenth aspect, embodiments of the present disclosure provide a communication apparatus. The apparatus includes a processor and an interface circuit, the interface circuit is configured to receive code instructions and transmit the code instructions to the processor, and the processor is configured to run the code instructions to enable the apparatus to execute the method described in the second aspect above.

In a fifteenth aspect, embodiments of the present disclosure provide a communication apparatus. The apparatus includes a processor and an interface circuit, the interface circuit is configured to receive code instructions and transmit the code instructions to the processor, and the processor is configured to run the code instructions to enable the apparatus to execute the method described in the third aspect above.

In a sixteenth aspect, embodiments of the present disclosure provide a positioning system. The system includes the communication apparatus described in the fourth aspect, the communication apparatus described in the fifth aspect, and the communication apparatus described in the sixth aspect; or, the system includes the communication apparatus described in the seventh aspect, the communication apparatus described in the eighth aspect, and the communication apparatus described in the ninth aspect; or, the system includes the communication apparatus described in the tenth aspect, the communication apparatus described in the eleventh aspect, and the communication apparatus described in the twelfth aspect; or, the system includes the communication apparatus described in the thirteenth aspect, the communication apparatus described in the fourteenth aspect, and the communication apparatus described in the fifteenth aspect.

In the seventeenth aspect, embodiments of the present invention provide a computer-readable storage medium, which is configured to store instructions used by the above-mentioned terminal device. When the instructions are executed, the terminal device executes the above-mentioned first aspect.

In an eighteenth aspect, embodiments of the present invention provide a readable storage medium for storing instructions used by the above-mentioned network device. When the instructions are executed, the network device executes the method described in the above-mentioned second aspect.

In a nineteenth aspect, embodiments of the present invention provide a readable storage medium for storing instructions used by the above-mentioned network device. When the instructions are executed, the network device executes the method described in the above-mentioned third aspect.

In a twentieth aspect, the present disclosure further provides a computer program product including a computer program, which, when run on a computer, causes the computer to execute the method described in the first aspect above.

In the twenty-first aspect, the present disclosure further provides a computer program product including a computer program, which, when run on a computer, causes the computer to execute the method described in the second aspect above.

In the twenty-second aspect, the present disclosure further provides a computer program product including a computer program, which, when run on a computer, causes the computer to execute the method described in the third aspect above.

In a twenty-third aspect, the present disclosure provides a chip system. The chip system includes at least one processor and an interface, configured to support a location management function (LMF) network element device to implement the functions involved in the first aspect, for example, determining or processing at least one of data and information involved in the above methods. In a possible design, the chip system further includes a memory. The memory is configured to store necessary computer programs and data of the terminal device. The chip system may consist of chips, or may include a chip and other discrete devices.

In a twenty-fourth aspect, the present disclosure provides a chip system. The chip system includes at least one processor and an interface, configured to support an access network device to implement the functions involved in the second aspect, for example, determining or processing at least one of data and information involved in the above methods. In a possible design, the chip system further includes a memory. The memory is configured to store necessary computer programs and data of the terminal device. The chip system may consist of chips, or may include a chip and other discrete devices.

In a twenty-fifth aspect, the present disclosure provides a chip system. The chip system includes at least one processor and an interface, configured to support a terminal device to implement the functions involved in the second aspect, for example, determining or processing at least one of data and information involved in the above methods. In a possible design, the chip system further includes a memory. The memory is configured to store necessary computer programs and data of the terminal device. The chip system may consist of chips, or may include a chip and other discrete devices.

In a twenty-sixth aspect, the present disclosure provides a computer program, which, when run on a computer, causes the computer to execute the method described in the first aspect above.

In a twenty-seventh aspect, the present disclosure provides a computer program, which, when run on a computer, causes the computer to execute the method described in the second aspect above.

In a twenty-eighth aspect, the present disclosure provides a computer program, which, when run on a computer, causes the computer to execute the method described in the third aspect above.

### BRIEF DESCRIPTION OF THE DRAWINGS

In order to more clearly illustrate technical solutions in embodiments of the present disclosure or the background art, the following will describe the drawings used for the embodiments of the present disclosure or the background art.
FIG. 1 is a schematic structural diagram of a communication system provided by an embodiment of the present disclosure.
FIG. 2 is a schematic flowchart of a method for positioning provided by an embodiment of the present disclosure.
FIG. 3 is a schematic flowchart of a method for positioning provided by an embodiment of the present disclosure.
FIG. 4 is a schematic flowchart of a method for positioning provided by an embodiment of the present disclosure.
FIG. 5 is a schematic flowchart of a method for positioning provided by an embodiment of the present disclosure.
FIG. 6 is a schematic flowchart of a method for positioning provided by an embodiment of the present disclosure.
Fig. 7 is a schematic flowchart of a method for positioning provided by an embodiment of the present disclosure.
FIG. 8 is a schematic flowchart of a method for positioning provided by an embodiment of the present disclosure.
FIG. 9 is a schematic flowchart of a method for positioning provided by an embodiment of the present disclosure.
FIG. 10 is a schematic flowchart of a method for positioning provided by an embodiment of the present disclosure.
FIG. 11 is a schematic flowchart of a method for positioning provided by an embodiment of the present disclosure.
Fig. 12 is a schematic flowchart of a method for positioning provided by an embodiment of the present disclosure.
Fig. 13 is a schematic flowchart of a method for positioning provided by an embodiment of the present disclosure.
Fig. 14 is a schematic flowchart of a method for positioning provided by an embodiment of the present disclosure.
Fig. 15 is a schematic flowchart of a method for positioning provided by an embodiment of the present disclosure.
Fig. 16 is a schematic structural diagram of a communication apparatus provided by an embodiment of the present disclosure.
Fig. 17 is a schematic structural diagram of another communication apparatus provided by an embodiment of the present disclosure.
FIG. 18 is a schematic structural diagram of a chip provided by an embodiment of the present disclosure.

### DETAILED DESCRIPTION

Reference will now be made in detail to exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the present disclosure. Rather, they are merely examples of apparatuses and methods consistent with aspects of the disclosed embodiments as recited in the appended claims.

For ease of understanding, terms involved in the present disclosure are introduced first.

### 1. Location management function (LMF)

The location management function (LMF) manages overall coordination and scheduling of resources required to register to a 5G core network (5GCN) or a location of a terminal device accessing the 5GCN. It also can calculate or verify a final location and any velocity estimates, and estimate an achieved accuracy. The LMF uses a service-based interface exhibited by LMF (Nlmf) interface to receive a location request for a target terminal device from an access and mobility management function (AMF). The LMF interacts with the terminal device to exchange location information suitable for terminal-device-assisted and terminal-device-based method for positionings, and interacts with a NG radio access network (NG-RAN) to obtain the location information.

### 2. Timing advance (TA)

The timing advance (TA) is used for uplink synchronization. When the TA timer expires, it means that the UE and gNB have no uplink synchronization. Only when the UE and gNB maintain uplink synchronization, an uplink positioning reference signal sent by the UE can be correctly received by the gNB.

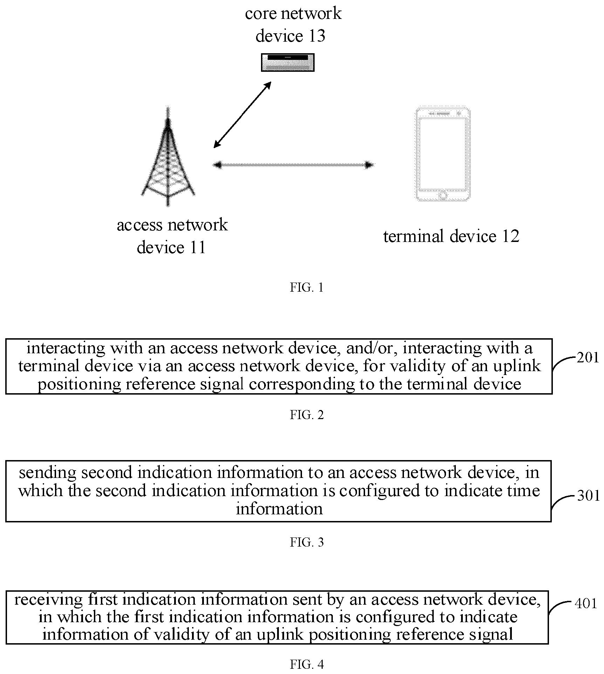

Please refer to FIG. 1, which is a schematic structural diagram of a communication system provided by an embodiment of the present disclosure. The communication system may include, but is not limited to, an access network device, a core network device, and a terminal device. The number and form of the devices shown in Figure 1 are for example only and do not constitute a limitation to embodiments of the present disclosure. In practical applications, it may include two or more access network devices, two or more core network devices, and two or more terminal devices. The communication system shown in FIG. 1 includes a network device 11, a core network device 13 and a terminal device 12 as an example.

It should be noted that the technical solutions of the embodiments of the present disclosure may be applied to various communication systems. For example: a long term evolution (LTE) system, a 5th generation (5G) mobile communication system, a 5G new radio (NR) system, or other future new mobile communication systems, etc.

The access network device 11 in the embodiments of the present disclosure is an entity on a network side for transmitting or receiving a signal. For example, the access network device 11 may be an evolved NodeB (eNB), a transmission reception point (TRP), a next generation NodeB, (gNB) in the NR system, a base station in other future mobile communication systems, or an access node in a wireless fidelity (WiFi) system, etc. The embodiments of the present disclosure do not limit the specific technology and specific device form adopted by the network device. The access network device provided by the embodiments of the present disclosure may be composed of a centralized unit (CU) and a distributed unit (DU). The CU may also be called a control unit. The structure of the CU-DU can separate protocol layers of the network device, such as a base station. Functions of some protocol layers are centrally controlled in the CU, and the remaining part or all of the functions of the protocol layers are distributed in the DU, and the CU centrally controls the DU.

The terminal device 12 in the embodiments of the present disclosure is an entity on a user side for receiving or transmitting a signal, such as a mobile phone. The terminal device may also be called terminal, user equipment (UE), mobile station (MS), mobile terminal (MT) and so on. The terminal device may be a car with a communication function, a smart car, a mobile phone, a wearable device, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and specific device form adopted by the terminal device.

It can be understood that the communication system described in the embodiment of the present disclosure is to illustrate the technical solutions of the embodiments of the present disclosure more clearly, and does not constitute a limitation on the technical solutions provided by the embodiments of the present disclosure. With the evolution of the system architecture and the emergence of new business scenarios, the technical solutions provided by the embodiments of the present disclosure are also applicable to similar technical problems.

Usually, the uplink positioning reference signal configured by the access network device for the terminal device in an RRC disconnected state (including RRC inactive state and RRC idle state) is time-sensitive. When the LMF requests a measurement result of the positioning reference signal from the base station, if the uplink positioning reference signal is invalid, the acquisition of positioning information will fail. Therefore, the access network device, the LMF and the terminal device can interact for validity of the uplink reference signal to avoid the phenomenon of failure to obtain positioning information. That is, the LMF can request the access network device to obtain the measurement result of the uplink positioning reference signal when it is determined that the uplink reference signal is valid, and can request the access network device to reallocate the uplink positioning reference signal when the uplink positioning reference signal is invalid.

A method and an apparatus for positioning provided by the present disclosure will be described in detail below with reference to the accompanying drawings.

Please refer to FIG. 2, which is a schematic flowchart of a method for positioning provided by an embodiment of the present disclosure. The method is performed by a core network device. In the present disclosure, the core network device may be an LMF network element, and the following embodiment is described by taking the LMF network element as an example.

As shown in FIG. 2, the method may include but not limited to the following steps:
step 201, interacting with an access network device, and/or, interacting with a terminal device via an access network device, for validity of an uplink positioning reference signal corresponding to the terminal device.

In the present disclosure, when a TA timer associated with the uplink positioning reference signal configured by the access network device for the terminal device expires, the terminal will release the uplink positioning reference signal configured by the access network device. At this time, the uplink positioning reference signal is invalid. Therefore, the network access device cannot correctly receive the uplink positioning reference signal sent by the terminal device, resulting in failure to obtain positioning information.

In the present disclosure, in order to prevent the failure of the LMF to obtain information due to the uplink positioning reference signal being invalid, the LMF network element can interact with the access network device and/or the terminal device for the validity of the uplink positioning reference signal, so that the LMF, the access network device and the terminal device maintain a consistent understanding of the validity of the uplink positioning reference signal. Therefore, the LMF can request to the base station a measurement result of the uplink positioning reference signal, such as an arrival time difference of the uplink positioning reference signal, when it is determined that the uplink positioning reference signal is valid.

Optionally, the validity of the uplink positioning reference signal may include a TA timer value corresponding to the uplink positioning reference signal, or the uplink positioning reference signal being invalid, or a valid duration of the uplink positioning reference signal.

It should be noted that in the present disclosure, the LMF may indicate validity information of the uplink positioning reference signal to the access network device, or the access network device may indicate the validity information of the uplink positioning reference signal to the LMF, or, the LMF may indicate to the access network device or to the terminal device via the access network device the validity information of the uplink positioning reference signal at the same time, or the LMF may also receive the validity information of the uplink positioning reference signal indicated by the access network device, and then indicates to the terminal device the validity information of the uplink positioning reference signal via the access network device, etc., which is not limited in the present disclosure.

For example, when the access network device allocates the TA timer value associated with the uplink positioning reference signal to the terminal device, it may send the TA timer value to the LMF, and the LMF may start timing after receiving the TA timer value. When the timing duration is greater than the TA timer value, it may be determined that the uplink positioning reference signal is invalid.

Alternatively, when the uplink positioning reference signal is invalid, the access network device may also send to the LMF information that the uplink positioning reference signal is invalid, and the LMF may determine that the uplink positioning reference signal is invalid after receiving the information that the uplink positioning reference signal is invalid.

Alternatively, the access network device may send valid duration information of the uplink positioning reference signal to the LMF, when the uplink positioning reference signal and a valid duration of the uplink positioning reference signal are allocated to the terminal device. After receiving the valid duration information of the uplink positioning reference signal, the LMF may start timing, and when the timing duration is larger than the valid duration, it may be determined that the uplink positioning reference signal is invalid.

Alternatively, the LMF may also send time information of the uplink positioning reference signal to the access network device, and then the access network device may refer to the time information of the uplink positioning reference signal to determine a TA timer value corresponding to the uplink positioning reference signal. For example, the access network device may set the TA timer value to be greater than the time information, which can ensure that the LMF obtains the positioning information before the TA timer expires.

The time information of the uplink positioning reference signal may include: a duration of the uplink positioning reference signal, or a recommended value of the timing advance (TA) timer of the uplink positioning reference signal, or a reference duration for requesting a measurement result of the uplink positioning reference signal, etc. The present disclosure is not limited thereto.

Alternatively, the LMF may also indicate the time information of the uplink positioning reference signal to the terminal device via the access network device, and then the terminal device may determine the TA timer value corresponding to the uplink positioning reference signal according to the time information of the uplink positioning reference signal.

Optionally, when the TA timer expires, the terminal device may also send the information that the uplink positioning reference signal is invalid to the LMF via the access network device, so that after receiving the information sent by the terminal device for indicating the uplink positioning reference signal being invalid, the LMF can determine that the uplink positioning reference signal is invalid.

In the present disclosure, the LMF can interact with the access network device and/or, the terminal device via the access network device and, for the validity of the uplink positioning reference signal corresponding to the terminal device. Therefore, the phenomenon of failure to obtain positioning information can be avoided, and the reliability of positioning is further improved.

Please refer to FIG. 3, which is a schematic flowchart of a method for positioning provided by an embodiment of the present disclosure. The method is performed by a core network device. In the present disclosure, the core network device may be an LMF network element, and the following embodiment is described by taking the LMF network element as an example.

As shown in FIG. 3, the method may include but not limited to the following steps:
step 301, sending second indication information to an access network device, in which the second indication information is configured to indicate time information.

In the present disclosure, the LMF may send a new radio positioning protocol A (NRPPa) positioning information request message to the access network to request positioning information from the access network device. Then the access network device may return the positioning information to the LMF through an NRPPa positioning information response message. When there is a positioning requirement, an NRPPa measurement result request message is sent to the access network device to obtain a measurement result.

In the present disclosure, the LMF may determine the time information according to a time interval between sending the NRPPa positioning information request message and sending the NRPPa measurement result request message.

The time information of the uplink positioning reference signal may include: a duration of the uplink positioning reference signal, or a recommended value of a timing advance (TA) timer of the uplink positioning reference signal, or a reference duration for requesting a measurement result of the uplink positioning reference signal, etc. The present disclosure is not limited thereto.

For example, the LMF may set the recommended value of the TA timer of the uplink positioning reference signal to be greater than the time interval, or may also determine the time interval as the reference duration of the measurement result of the uplink positioning reference signal, so as to ensure that when the LMF requests the measurement result, the uplink positioning reference signal is still valid. That is, the LMF may reliably obtain the measurement result, and then perform reliable and accurate positioning for the terminal device.

Optionally, the LMF may send the second indication information to the access network device in an independent NRPPa message, or may also send the second indication information to the access network device through an NRPPa positioning information request message. For example, a preset bit in the NRPPa positioning information request message may be used to indicate the second indication information, and then the access network device may parse the NRPPa positioning information request message after receiving the NRPPa positioning information request message, so as to determine the second indication information according to a value of the preset bit.

After determining the second indication information, the access network device may configure the value of the TA timer corresponding to the uplink positioning reference signal according to the time information indicated in the second indication information. For example, the time information indicated by the second indication information is the recommended value of the TA timer of the uplink positioning reference signal, and the access network device may set the value of the TA timer to be greater than or equal to the recommended value of the TA timer. Alternatively, the time information indicated by the second indication information is the duration of the uplink positioning reference signal, then the access network device may set the value of TA timer to be greater than or equal to the duration of the uplink positioning reference signal, etc., so as to further ensure that, when the LMF requests the measuring result, the uplink positioning reference signal is in the valid state.

In the present disclosure, the LMF sends to the access network device the second indication information configured to indicate the time information of the uplink positioning reference signal. Therefore, the access network device can determine the TA timer value of the terminal device according to the second indication information, thereby avoiding the phenomenon of failure to obtain positioning information, and further improving the reliability of positioning.

Please refer to FIG. 4, which is a schematic flowchart of a method for positioning provided by an embodiment of the present disclosure. The method is performed by a core network device. In the present disclosure, the core network device may be an LMF network element, and the following embodiment is described by taking the LMF network element as an example.

As shown in FIG. 4, the method may include but not limited to the following steps:
step 401, receiving first indication information sent by an access network device, in which the first indication information is configured to indicate information of validity of an uplink positioning reference signal.

The validity of the uplink positioning reference signal may include a TA timer value corresponding to the uplink positioning reference signal, or the uplink positioning reference signal being invalid, or a valid duration of the uplink positioning reference signal. The present disclosure is not limited thereto.

In the present disclosure, the LMF may receive the first indication information sent by the access network device through an NRPPa positioning information response message. For example, the access network device may configure the first indication information in the NRPPa positioning information response message. When the LMF sends a positioning information request message to the access network device through the NRPPa, the access network device may immediately return the configured NRPPa positioning information response message to the LMF.

Optionally, the LMF may also receive the first indication information sent by the access network device through an NRPPa positioning information update message. For example, the access network device may configure the first indication information in the NRPPa positioning information update message. When the LMF sends a positioning information update request message to the access network device through the NRPPa, the access network device may send the configured NRPPa positioning information update message to the LMF.

Optionally, if the first indication information indicates that the uplink positioning reference signal is invalid, the LMF may also receive the first indication information sent by the access network device through an NRPPa positioning information failure message. For example, the access network device may configure the first indication information in the NRPPa positioning information failure message. When the LMF sends a positioning information request message to the access network device through the NRPPa, in a case of positioning failure, the access network device may send the configured NRPPa positioning information failure message to the LMF.

In the present disclosure, the LMF can receive the first indication information sent by the access network device, in which the first indication information is configured to indicate the information of the validity of the uplink positioning reference signal. Therefore, the phenomenon of failure to obtain positioning information can be avoided, and the reliability of positioning is further improved.

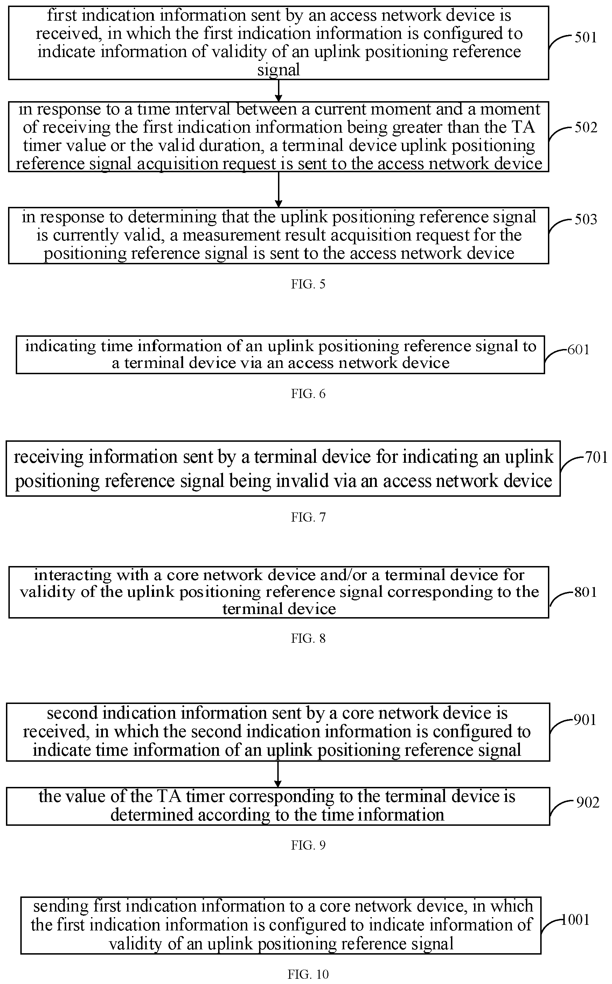

Please refer to FIG. 5, which is a schematic flowchart of a method for positioning provided by an embodiment of the present disclosure. The method is performed by a core network device. In the present disclosure, the core network device may be an LMF network element, and the following embodiment is described by taking the LMF network element as an example.

As shown in FIG. 5, the method may include but not limited to the following steps.

Step 501, first indication information sent by an access network device is received, in which the first indication information is configured to indicate information of validity of an uplink positioning reference signal.

The validity of the uplink positioning reference signal may include a TA timer value corresponding to the uplink positioning reference signal, or the uplink positioning reference signal being invalid, or a valid duration of the uplink positioning reference signal. The present disclosure is not limited thereto.

In the present disclosure, the LMF may receive the first indication information sent by the access network device through an NRPPa positioning information response message. For example, the access network device may configure the first indication information in the NRPPa positioning information response message. When the LMF sends a positioning information request message to the access network device through the NRPPa, the access network device may immediately return the configured NRPPa positioning information response message to the LMF.

Optionally, the LMF may also receive the first indication information sent by the access network device through an NRPPa positioning information update message. For example, the access network device may configure the first indication information in the NRPPa positioning information update message. When the LMF sends a positioning information update request message to the access network device through the NRPPa, the access network device may send the configured NRPPa positioning information update message to the LMF

Optionally, if the first indication information indicates that the uplink positioning reference signal is invalid, the LMF may also receive the first indication information sent by the access network device through an NRPPa positioning information failure message. For example, the access network device may configure the first indication information in the NRPPa positioning information failure message. When the LMF sends a positioning information request message to the access network device through the NRPPa, in a case of positioning failure, the access network device may send the configured NRPPa positioning information failure message to the LMF.

Step 502, in response to a time interval between a current moment and a moment of receiving the first indication information being greater than the TA timer value or the valid duration, a terminal device uplink positioning reference signal acquisition request is sent to the access network device.

In the present disclosure, after receiving the first indication information sent by the access network device, the LMF may parse the first indication information to determine the TA timer value or the valid duration corresponding to the uplink positioning reference signal. When there is a positioning requirement, it is first determined whether the uplink positioning reference signal is valid at the current moment according to the validity information indicated by the first indication information.

Optionally, when the time interval between the current moment and the moment of receiving the first indication information is greater than the TA timer value or the valid duration, or the first indication information indicates that the uplink positioning reference signal is invalid, the uplink positioning reference signal may be determined to be invalid. Therefore, the LMF can send the terminal device uplink positioning reference signal acquisition request to the access network device, so as to obtain a new uplink positioning reference signal.

Step 503, in response to determining that the uplink positioning reference signal is currently valid, a measurement result acquisition request for the positioning reference signal is sent to the access network device.

In the present disclosure, the LMF may determine the uplink positioning reference signal to be valid, when the time interval between the current moment and the moment of receiving the first indication information is less than the TA timer value or the valid duration, or the first indication information indicates that the uplink positioning reference signal is valid. Then, the LMF may send the measurement result acquisition request for the positioning reference signal to the access network device, so as to obtain the measurement result of the positioning reference signal, for determining the positioning information of the terminal device.

In the present disclosure, after the LMF receives the first indication information that is sent by the access network device and is configured to indicate the information of the validity of the uplink positioning reference signal, when there is a positioning demand, it is first determined whether the uplink positioning reference signal is valid at the current moment according to the first indication information. When the uplink positioning reference signal is invalid, the terminal device uplink positioning reference signal acquisition request is sent to the access network device. When the uplink positioning reference signal is currently valid, the measurement result acquisition request for the positioning reference signal is sent to the access network device. Therefore, not only wasting signaling for acquiring the measurement result can be avoided when the uplink positioning reference signal is invalid, but also the positioning time can be reduced and the positioning speed can be improved.

Please refer to FIG. 6, which is a schematic flowchart of a method for positioning provided by an embodiment of the present disclosure. The method is performed by a core network device. In the present disclosure, the core network device may be an LMF network element, and the following embodiment is described by taking the LMF network element as an example.

As shown in FIG. 6, the method may include but not limited to the following steps:
step 601, indicating time information of an uplink positioning reference signal to a terminal device via an access network device.

The time information of the uplink positioning reference signal may be a duration of the uplink positioning reference signal, or a recommended value of a timing advance (TA) timer of the uplink positioning reference signal, or a reference duration for requesting a measurement result of the uplink positioning reference signal, etc. The present disclosure is no limit thereto.

In the present disclosure, the LMF may send the time information of the uplink positioning reference signal to the terminal device via the access network device, and the terminal device may determine a value of the TA timer according to the time information. For example, when the time information is the recommended value of the TA timer of the uplink positioning reference signal, the value of the TA timer may be set to be greater than the recommended value of the TA timer. Alternatively, when the time information is the duration of the uplink positioning reference signal, the value of the TA timer may be set to be greater than the duration of the uplink positioning reference signal. Alternatively, when the time information is the reference duration of the measurement result of the uplink positioning reference signal, the value of the TA timer may be set to be greater than the reference duration of the measurement result of the uplink positioning reference signal.

It can be understood that, the LMF indicates the time information of the uplink positioning reference signal to the terminal device via the access network device, and then when there is a positioning demand, it is first determined whether the uplink positioning reference signal is invalid according to the indicated time information, and then it is determined whether to send a positioning measurement result acquisition request to the access network device, so as to avoid wasting the signaling of the measurement result acquisition request sent by the LMF when the uplink positioning reference signal is invalid.

In the present disclosure, the LMF can indicate the time information of the uplink positioning reference signal to the terminal device via the access network device, so that the terminal device can determine the TA timer value of the terminal device according to the time information, thereby avoiding the phenomenon of failure to obtain positioning information, and further improving the reliability of positioning.

Please refer to FIG. 7, which is a schematic flowchart of a method for positioning provided by an embodiment of the present disclosure. The method is performed by a core network device. In the present disclosure, the core network device may be an LMF network element, and the following embodiment is described by taking the LMF network element as an example.

As shown in FIG. 7, the method may include but not limited to the following steps:
step 701, receiving information sent by a terminal device for indicating an uplink positioning reference signal being invalid via an access network device.

In the present disclosure, when the terminal device determines that a TA timer expires, it may determine that the uplink positioning reference signal is invalid, and then may send the information that the uplink positioning reference signal is invalid to the LMF.

The information that the uplink positioning reference signal is invalid may be identified by any bit in the sent information. For example, this bit may be 0 by default, and this bit may be set to 1 when the uplink positioning reference signal is invalid. Therefore, after receiving the information indicating that the uplink positioning reference signal is invalid, the LMF may determine that the uplink positioning reference signal is invalid according to the value of this bit.

In the present disclosure, the LMF may receive, via the access network device, the information sent by the terminal device for indicating that the uplink positioning reference signal is invalid. Therefore, the phenomenon of failure to obtain positioning information is avoided, and the reliability of positioning is further improved.

Please refer to FIG. 8, which is a schematic flowchart of a method for positioning provided by an embodiment of the present disclosure. The method is performed by an access network device. In the present disclosure, a core network device may be an LMF network element, and the following embodiment is described by taking the LMF network element as an example.

As shown in FIG. 8, the method may include but not limited to the following steps:
step 801, interacting with a core network device and/or a terminal device for validity of an uplink positioning reference signal corresponding to the terminal device.

In the present disclosure, in order to prevent the failure of the LMF to obtain information due to the uplink positioning reference signal being invalid, the access network device can interact for the validity of the uplink positioning reference signal with the LMF and/or the terminal device, so that the LMF, the access network device, and the terminal device maintain a consistent understanding of the validity of the uplink positioning reference signal. Therefore, the LMF can request to the base station a measurement result of the uplink positioning reference signal, such as an arrival time difference of the uplink positioning reference signal, when it is determined that the uplink positioning reference signal is valid.

Optionally, the validity of the uplink positioning reference signal may include a TA timer value corresponding to the uplink positioning reference signal, or the uplink positioning reference signal being invalid, or a valid duration of the uplink positioning reference signal.

It should be noted that in the present disclosure, the LMF may indicate validity information of the uplink positioning reference signal to the access network device, or the access network device may indicate the validity information of the uplink positioning reference signal to the LMF, or, the LMF may indicate to the access network device or to the terminal device via the access network device the validity information of the uplink positioning reference signal at the same time, or the LMF may also receive the validity information of the uplink positioning reference signal indicated by the access network device, and then indicates to the terminal device the validity information of the uplink positioning reference signal via the access network device, etc., which is not limited in the present disclosure.

For example, when the access network device allocates the TA timer value associated with the uplink positioning reference signal to the terminal device, it may send the TA timer value to the LMF, and the LMF may start timing after receiving the TA timer value. When the timing duration is greater than the TA timer value, it may be determined that the uplink positioning reference signal is invalid.

Alternatively, when the uplink positioning reference signal is invalid, the access network device may also send to the LMF information that the uplink positioning reference signal is invalid, and the LMF may determine that the uplink positioning reference signal is invalid after receiving the information that the uplink positioning reference signal is invalid.

Alternatively, the access network device may send valid duration information of the uplink positioning reference signal to the LMF, when the uplink positioning reference signal and a valid duration of the uplink positioning reference signal are allocated to the terminal device. After receiving the valid duration information of the uplink positioning reference signal, the LMF may start timing, and when the timing duration is larger than the valid duration, it may be determined that the uplink positioning reference signal is invalid.

Alternatively, the LMF may also send time information of the uplink positioning reference signal to the access network device, and then the access network device may refer to the time information of the uplink positioning reference signal to determine a TA timer value corresponding to the uplink positioning reference signal. For example, the access network device may set the TA timer value to be greater than the time information, which can ensure that the LMF obtains the positioning information before the TA timer expires.

The time information of the uplink positioning reference signal may include: a duration of the uplink positioning reference signal, or a recommended value of the timing advance (TA) timer of the uplink positioning reference signal, or a reference duration for requesting a measurement result of the uplink positioning reference signal, etc. The present disclosure is not limited thereto.

Alternatively, the access network device may also indicate validity information of the uplink positioning reference signal to the terminal device, and then the terminal device may determine that the uplink positioning reference signal is invalid according to the validity information of the uplink positioning reference signal.

Optionally, when the TA timer expires, the terminal device may also send the information that the uplink positioning reference signal is invalid to the access network device via the access network device, so that after receiving the information sent by the terminal device for indicating the uplink positioning reference signal being invalid, it may be determined that the uplink positioning reference signal is invalid.

In the present disclosure, the access network device can interact with the core network device and/or the terminal device for the validity of the uplink positioning reference signal corresponding to the terminal device, so as to avoid the phenomenon of failure to obtain positioning information, and further improve the reliability of positioning.

Please refer to FIG. 9, which is a schematic flowchart of a method for positioning provided by an embodiment of the present disclosure. The method is performed by an access network device. In the present disclosure, a core network device may be an LMF network element, and the following embodiment is described by taking the LMF network element as an example.

As shown in FIG. 9, the method may include but not limited to the following steps.

Step 901, second indication information sent by a core network device is received, in which the second indication information is configured to indicate time information of an uplink positioning reference signal.

In the present disclosure, the LMF may send a new radio positioning protocol A (NRPPa) positioning information request message to the access network to request positioning information from the access network device. Then the access network device may return the positioning information to the LMF through an NRPPa positioning information response message. When there is a positioning requirement, an NRPPa measurement result request message is sent to the access network device to obtain a measurement result.

In the present disclosure, the LMF may determine the time information according to a time interval between sending the NRPPa positioning information request message and sending the NRPPa measurement result request message.

The time information of the uplink positioning reference signal may include: a duration of the uplink positioning reference signal, or a recommended value of a timing advance (TA) timer of the uplink positioning reference signal, or a reference duration for requesting a measurement result of the uplink positioning reference signal, etc. The present disclosure is not limited thereto.

For example, the LMF may set the recommended value of the TA timer of the uplink positioning reference signal to be greater than the time interval, or may also determine the time interval as the reference duration of the measurement result of the uplink positioning reference signal, so as to ensure that when the LMF requests the measurement result, the uplink positioning reference signal is still valid. That is, the LMF may reliably obtain the measurement result, and then perform reliable and accurate positioning for the terminal device.

Optionally, the LMF may send the second indication information to the access network device in an independent NRPPa message, or may also send the second indication information to the access network device through an NRPPa positioning information request message. For example, a preset bit in the NRPPa positioning information request message may be used to indicate the second indication information, and then the access network device may parse the NRPPa positioning information request message after receiving the NRPPa positioning information request message, so as to determine the second indication information according to a value of the preset bit.

Step 902, the value of the TA timer corresponding to the terminal device is determined according to the time information.

In the present disclosure, after determining the second indication information, the access network device may configure the value of the TA timer corresponding to the uplink positioning reference signal according to the time information indicated in the second indication information. For example, the time information indicated by the second indication information is the recommended value of the TA timer of the uplink positioning reference signal, and the access network device may set the value of the TA timer to be greater than or equal to the recommended value of the TA timer. Alternatively, the time information indicated by the second indication information is the duration of the uplink positioning reference signal, then the access network device may set the value of TA timer to be greater than or equal to the duration of the uplink positioning reference signal, etc., so as to further ensure that, when the LMF requests the measuring result, the uplink positioning reference signal is in the valid state.

In the present disclosure, after receiving the second indication information sent by the LMF network element for indicating the time information of the uplink positioning reference signal, the access network device can determine the value of the TA timer corresponding to the terminal device according to the time information. Therefore, the phenomenon of failure to obtain positioning information can be avoided, and the reliability of positioning is further improved.

Please refer to FIG. 10, which is a schematic flowchart of a method for positioning provided by an embodiment of the present disclosure. The method is performed by an access network device. In the present disclosure, a core network device may be an LMF network element, and the following embodiment is described by taking the LMF network element as an example.

As shown in FIG. 10, the method may include but not limited to the following steps:
step 1001, sending first indication information to a core network device, in which the first indication information is configured to indicate information of validity of an uplink positioning reference signal.

The validity of the uplink positioning reference signal may include a TA timer value corresponding to the uplink positioning reference signal, or the uplink positioning reference signal being invalid, or a valid duration of the uplink positioning reference signal. The present disclosure is not limited thereto.

In the present disclosure, the access network device may configure the first indication information in the NRPPa positioning information response message. When the LMF sends a positioning information request message to the access network device through the NRPPa, the access network device may immediately return the configured NRPPa positioning information response message to the LMF.

Optionally, the access network device may configure the first indication information in the NRPPa positioning information update message. When the LMF sends a positioning information update request message to the access network device through the NRPPa, the access network device may send the configured NRPPa positioning information update message to the LMF.

Optionally, if the first indication information indicates that the uplink positioning reference signal is invalid, the access network device may configure the first indication information in the NRPPa positioning information failure message. When the LMF sends a positioning information request message to the access network device through the NRPPa, in a case of positioning failure, the access network device may send the configured NRPPa positioning information failure message to the LMF.

In the present disclosure, the access network device can send to the LMF network element the first indication information configured to indicate the information of the validity of the uplink positioning reference signal. When there is a positioning requirement, the LMF can first determine whether the uplink positioning reference signal is valid at the current moment according to the first indication information. When the uplink positioning reference signal is invalid, send the terminal device uplink positioning reference signal acquisition request to the access network device. When the uplink positioning reference signal is currently valid, a measurement result acquisition request for the positioning reference signal is sent to the access network device. Therefore, not only wasting signaling for acquiring the measurement result can be avoided when the uplink positioning reference signal is invalid, but also the positioning time can be reduced and the positioning speed can be improved.

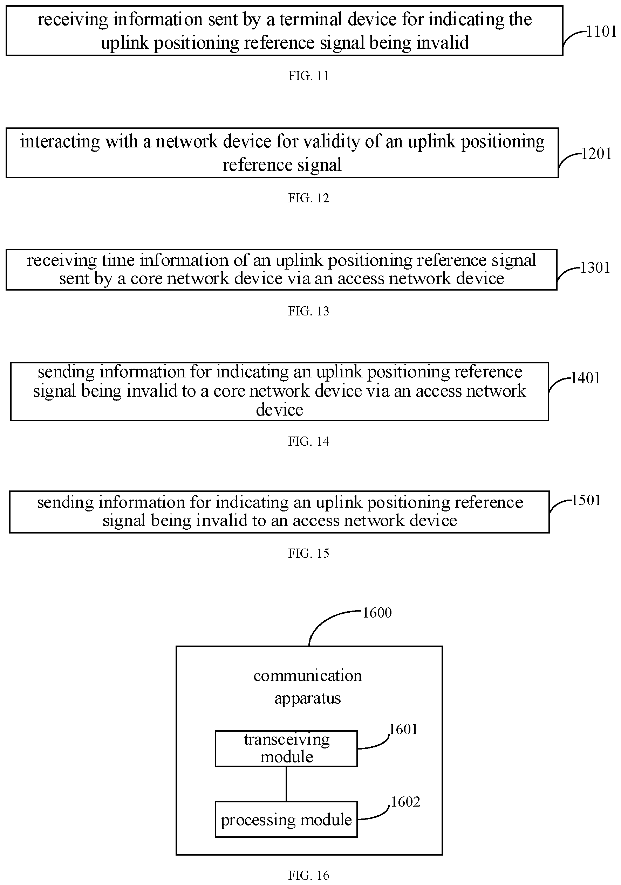

Please refer to FIG. 11, which is a schematic flowchart of a method for positioning provided by an embodiment of the present disclosure. The method is performed by an access network device. In the present disclosure, a core network device may be an LMF network element, and the following embodiment is described by taking the LMF network element as an example.

As shown in FIG. 11, the method may include but not limited to the following steps:
step 1101, receiving information sent by a terminal device for indicating the uplink positioning reference signal being invalid.

In the present disclosure, when the terminal device determines that the TA timer expires, it may determine that the uplink positioning reference signal is invalid, and then may send the information that the uplink positioning reference signal is invalid to the access network device.

The information that the uplink positioning reference signal is invalid may be identified by any bit in the sent information. For example, this bit may be 0 by default, and this bit may be set to 1 when the uplink positioning reference signal is invalid. Therefore, after receiving the information indicating that the uplink positioning reference signal is invalid, the access network device may determine that the uplink positioning reference signal is invalid according to the value of this bit.

Optionally, when the terminal device sends to the access network device the information for indicating that the uplink positioning reference signal is invalid, by sending a radio resource control (RRC) resume request message, the access network device may receive the RRC resume request message, so as to determine that the uplink positioning reference signal is invalid.

In the present disclosure, the access network device can receive the information sent by the terminal device for indicating the uplink positioning reference signal being invalid. Therefore, the phenomenon of failure to obtain positioning information is avoided, and the reliability of positioning is further improved.

Please refer to FIG. 12, which is a schematic flowchart of a method for positioning provided by an embodiment of the present disclosure. The method is performed by a terminal device. In the present disclosure, a core network device may be an LMF network element, and the following embodiment is described by taking the LMF network element as an example.

As shown in FIG. 12, the method may include but not limited to the following steps:
step 1201, interacting with a network device for validity of an uplink positioning reference signal.

The network device may include an access network equipment, an LMF, and the like. The present disclosure is not limited thereto.

In the present disclosure, in order to prevent the failure of the LMF to obtain information due to the uplink positioning reference signal being invalid, the terminal device can interact with the access network device and/or the LMF for the validity of the uplink positioning reference signal, so that the LMF, the access network device and the terminal device maintain a consistent understanding of the validity of the uplink positioning reference signal. Therefore, the LMF can request to the base station a measurement result of the uplink positioning reference signal, such as an arrival time difference of the uplink positioning reference signal, when it is determined that the uplink positioning reference signal is valid.

Optionally, the validity of the uplink positioning reference signal may include a TA timer value corresponding to the uplink positioning reference signal, or the uplink positioning reference signal being invalid, or a valid duration of the uplink positioning reference signal.

It should be noted that in the present disclosure, the LMF may indicate validity information of the uplink positioning reference signal to the access network device, or the access network device may indicate the validity information of the uplink positioning reference signal to the LMF, or, the LMF may indicate to the access network device or to the terminal device via the access network device the validity information of the uplink positioning reference signal at the same time, or the LMF may also receive the validity information of the uplink positioning reference signal indicated by the access network device, and then indicates to the terminal device the validity information of the uplink positioning reference signal via the access network device, etc., which is not limited in the present disclosure.

For example, the access network device may also send the validity information of the uplink positioning reference signal to the terminal device, and then the terminal device may determine that the uplink positioning reference signal is invalid according to the validity information of the uplink positioning reference signal.

Alternatively, the terminal device, when the TA timer expires, may also send the information that the uplink positioning reference signal is invalid to the access network device.

Alternatively, the LMF may also indicate the time information of the uplink positioning reference signal to the terminal device via the access network device, and then the terminal device may determine the TA timer value corresponding to the uplink positioning reference signal according to the time information of the uplink positioning reference signal.

The time information of the uplink positioning reference signal may be a duration of the uplink positioning reference signal, or a recommended value of the timing advance (TA) timer of the uplink positioning reference signal, or a reference duration for requesting a measurement result of the uplink positioning reference signal, etc. The present disclosure is not limited thereto.

Alternatively, when the TA timer expires, the terminal device may also send the information that the uplink positioning reference signal is invalid to the LMF via the access network device, so that after receiving the information sent by the terminal device for indicating the uplink positioning reference signal being invalid, the LMF may determine that the uplink positioning reference signal is invalid.

In the present disclosure, the terminal device can interact with the network device for the validity of the uplink positioning reference signal, thereby avoiding the phenomenon of failure to obtain positioning information, and further improving the reliability of positioning.

Please refer to FIG. 13, which is a schematic flowchart of a method for positioning provided by an embodiment of the present disclosure. The method is performed by a terminal device. In the present disclosure, a core network device may be an LMF network element, and the following embodiment is described by taking the LMF network element as an example.

As shown in FIG. 13, the method may include but not limited to the following steps:
step 1301, receiving time information of an uplink positioning reference signal sent by a core network device via an access network device.

The time information of the uplink positioning reference signal may be a duration of the uplink positioning reference signal, or a recommended value of a timing advance (TA) timer of the uplink positioning reference signal, or a reference duration for requesting a measurement result of the uplink positioning reference signal, etc. The present disclosure is not limited thereto.

In the present disclosure, the LMF may send the time information of the uplink positioning reference signal to the terminal device via the access network device, and the terminal device may determine a value of the TA timer according to the time information. For example, when the time information is the recommended value of the TA timer of the uplink positioning reference signal, the value of the TA timer may be set to be greater than the recommended value of the TA timer. Alternatively, when the time information is the duration of the uplink positioning reference signal, the value of the TA timer may be set to be greater than the duration of the uplink positioning reference signal. Alternatively, when the time information is the reference duration of the measurement result of the uplink positioning reference signal, the value of the TA timer may be set to be greater than the reference duration of the measurement result of the uplink positioning reference signal.

It can be understood that, the LMF indicates the time information of the uplink positioning reference signal to the terminal device via the access network device, and then when there is a positioning demand, it is first determined whether the uplink positioning reference signal is invalid according to the indicated time information, and then it is determined whether to send a positioning measurement result acquisition request to the access network device, so as to avoid wasting the signaling of the measurement result acquisition request sent by the LMF when the uplink positioning reference signal is invalid.

In the present disclosure, the terminal device can receive the time information of the uplink positioning reference signal sent by the core network device via the access network device, so that the terminal device can determine the TA timer value of the terminal device according to the time information, thereby avoiding the phenomenon of failure of to obtain positioning information, and further improving the reliability of positioning.

Please refer to FIG. 14, which is a schematic flowchart of a method for positioning provided by an embodiment of the present disclosure. The method is performed by a terminal device. In the present disclosure, a core network device may be an LMF network element, and the following embodiment is described by taking the LMF network element as an example.

As shown in FIG. 14, the method may include but not limited to the following steps:
step 1401, sending information for indicating an uplink positioning reference signal being invalid to a core network device via an access network device.

In the present disclosure, when the terminal device determines that the TA timer expires, it may determine that the uplink positioning reference signal is invalid, and then may send the information that uplink positioning reference signal is invalid to the LMF via the access network device.

The information that the uplink positioning reference signal is invalid may be identified by any bit in the sent information. For example, this bit may be 0 by default, and this bit may be set to 1 when the uplink positioning reference signal is invalid. Therefore, after receiving the information indicating that the uplink positioning reference signal is invalid, the LMF may determine that the uplink positioning reference signal is invalid according to the value of this bit.

In the present disclosure, the terminal device can send the information for indicating the uplink positioning reference signal being invalid to the core network device via the access network device. Therefore, the phenomenon of failure to obtain positioning information is avoided, and the reliability of positioning is further improved.

Please refer to FIG. 15, which is a schematic flowchart of a method for positioning provided by an embodiment of the present disclosure. The method is performed by a terminal device. In the present disclosure, a core network device may be an LMF network element, and the following embodiment is described by taking the LMF network element as an example.

As shown in FIG. 15, the method may include but not limited to the following steps:
step 1501, sending information for indicating an uplink positioning reference signal being invalid to an access network device.

In the present disclosure, when the terminal device determines that the TA timer expires, it may determine that the uplink positioning reference signal is invalid, and then may send information that the uplink positioning reference signal is invalid to the access network device.

The information that the uplink positioning reference signal is invalid may be identified by any bit in the sent information. For example, this bit may be 0 by default, and this bit may be set to 1 when the uplink positioning reference signal is invalid. Therefore, after receiving the information indicating that the uplink positioning reference signal is invalid, the access network device may determine that the uplink positioning reference signal is invalid according to the value of this bit.

Optionally, the terminal device may also send the information for indicating the uplink positioning reference signal being invalid to the access network device through a radio resource control (RRC) resume request message.

Optionally, the terminal device may send the information for indicating the uplink positioning reference signal being invalid to an access network device that allocated the uplink positioning reference signal for it, and may also send the information to other access network devices.

In the present disclosure, the terminal device can send the information for indicating the uplink positioning reference signal being invalid to the access network device, thereby the phenomenon of failure to obtain positioning information is avoided, and the reliability of positioning is further improved.

Please refer to FIG. 16, which is a schematic structural diagram of a communication apparatus 1600 provided by an embodiment of the present disclosure. The communication apparatus 1600 shown in FIG. 16 may include a transceiving module 1601 and a processing module 1602. The transceiving module 1601 may include a sending module and/or a receiving module, the sending module is configured to realize a sending function, the receiving module is configured to realize a receiving function, and the transceiving module 1601 can realize the sending function and/or the receiving function.

It can be understood that the communication apparatus 1600 may be a core network device, may also be a core network device, and may also be a device that can be matched with the core network device.

The communication apparatus 1600 is on a side of the core network equipment for positioning.

The transceiving module 1601 is configured to interact with an access network device for validity of an uplink positioning reference signal corresponding to a terminal device; and/or interact with a terminal device for validity of an uplink positioning reference signal via an access network device.

Optionally, the transceiving module 1601 is specifically configured to:
receive first indication information sent by the access network device, in which the first indication information is configured to indicate information of the validity of the uplink positioning reference signal;
or, send second indication information to the access network device, in which the second indication information is configured to indicate time information of the uplink positioning reference signal.

Optionally, the transceiving module 1601 is specifically configured to:
receive the first indication information sent by the access network device through a new radio positioning protocol A (NRPPa) positioning information response message;
or, receive the first indication information sent by the access network device through an NRPPa positioning information update message;
or, receive the first indication information sent by the access network device through an NRPPa positioning information failure message.

Optionally, the validity of the uplink positioning reference signal includes any one of:
a timing advance (TA) timer value corresponding to the uplink positioning reference signal;
the uplink positioning reference signal being invalid; or
a valid duration of the uplink positioning reference signal.

Optionally, the transceiving module 1601 is further configured to:
in response to a time interval between a current moment and a moment of receiving the first indication information being greater than the TA timer value or the valid duration, sending a terminal device uplink positioning reference signal acquisition request to the access network device;
   or,
in response to the first indication information indicating the uplink positioning reference signal being invalid, sending a terminal device uplink positioning reference signal acquisition request to the access network device.

Optionally, the time information is any one of:
a duration of the uplink positioning reference signal;
a recommended value of a timing advance (TA) timer of the uplink positioning reference signal; or
a reference duration for requesting a measurement result of the uplink positioning reference signal.

Optionally, the communication apparatus further includes:
a processing module 1602, configured to determine the time information according to a time interval between sending an NRPPa positioning information request message and sending an NRPPa measurement result request message.

Optionally, the transceiving module 1601 is specifically configured to:
send the second indication information to the access network device through the NRPPa positioning information request message.

Optionally, the transceiving module 1601 is further configured to:
indicate time information of the uplink positioning reference signal to the terminal device via the access network device;
or, receive information sent by the terminal device for indicating the uplink positioning reference signal being invalid via the access network device.

Optionally, the transceiving module 1601 is further configured to:
in response to determining that the uplink positioning reference signal is currently valid, send a measurement result acquisition request for the positioning reference signal to the access network device.

In the present disclosure, the LMF can interact with the access network device and/or, interact with the terminal device via the access network device and, for the validity of the uplink positioning reference signal corresponding to the terminal device, so as to avoid the phenomenon of failure to obtain positioning information, and further improve the reliability of positioning.

It can be understood that the communication apparatus 1600 may be an access network device, an apparatus in the access network device, or an apparatus used in conjunction with the access network device.

The communication apparatus 1600 is on a side of the access network device.

The transceiving module 1601 is configured to interacting with a core network device for validity of an uplink positioning reference signal corresponding to a terminal device; and/or interact with a terminal device for validity of an uplink positioning reference signal.

Optionally, the transceiving module 1601 is specifically configured to:
send first indication information to the core network device, in which the first indication information is configured to indicate information of the validity of the uplink positioning reference signal;
or, receive second indication information sent by the core network device, in which the second indication information is configured to indicate time information of the uplink positioning reference signal.

Optionally, the transceiving module 1601 is specifically configured to:
send the first indication information to the core network device through an NRPPa positioning information response message;
or, send the first indication information to the core network device through an NRPPa positioning information update message;
or, send the first indication information to the core network device through an NRPPa positioning information failure message.

Optionally, the information of the validity of the uplink positioning reference signal includes any of:
a TA timer value corresponding to the uplink positioning reference signal;
the uplink positioning reference signal being invalid;
a valid duration of the uplink positioning reference signal.

Optionally, the communication apparatus further includes:
a processing module 1602, configured to determine a value of a TA timer corresponding to the terminal device according to the time information.

Optionally, the time information is any one of:
a duration of the uplink positioning reference signal;
a recommended value of a timing advance (TA) timer of the uplink positioning reference signal;
a reference duration for requesting a measurement result of the uplink positioning reference signal.

Optionally, the processing device 1602 is specifically configured to:
determine that the value of the TA timer is greater than or equal to the duration of the uplink positioning reference signal;
or, determine that the value of the TA timer is greater than or equal to the recommended value of the TA timer;
or, determine that the value of the TA timer is greater than or equal to the reference duration of the uplink positioning reference signal measurement result.

Optionally, the transceiver 1601 is specifically configured to:
receive the second indication information sent by the core network device through an NRPPa positioning information request message.

Optionally, the transceiver 1601 is specifically configured to:
indicate to the terminal device information of the validity of the uplink positioning reference signal; or receive information sent by the terminal device for indicating the uplink positioning reference signal being invalid.

Optionally, the transceiving module 1601 is specifically configured to:
receive the information sent by the terminal device for indicating the uplink positioning reference signal being invalid through a radio resource control (RRC) resume request message.

In the present disclosure, the access network device can interact with the core network device and/or the terminal device for the validity of the uplink positioning reference signal corresponding to the terminal device, so as to avoid the phenomenon of failure to obtain positioning information, and further improve the reliability of positioning.

It can be understood that the communication apparatus 1600 may be a terminal device, may also be an apparatus in the terminal device, and may also be an apparatus used in conjunction with the terminal device.

The communication apparatus 1600 is on a side of the terminal device.

The transceiving module 1601 is configured to interact with the network device for validity of an uplink positioning reference signal.

Optionally, the transceiving module 1601 is specifically configured to:
receive time information of the uplink positioning reference signal sent by a core network device via the access network device;
or, receive information of the validity of the uplink positioning reference signal sent by the access network device
or, send information for indicating the uplink positioning reference signal being invalid to the core network device via the access network device;
or, sending information for indicating the uplink positioning reference signal being invalid to the access network device.

Optionally, the transceiving module 1601 is specifically configured to:
send the information for indicating the uplink positioning reference signal being invalid to the access network device, through a radio resource control (RRC) resume request message.

In the present disclosure, the terminal device can interact with the network device for the validity of the uplink positioning reference signal, thereby avoiding the phenomenon of failure to obtain positioning information, and further improving the reliability of positioning.

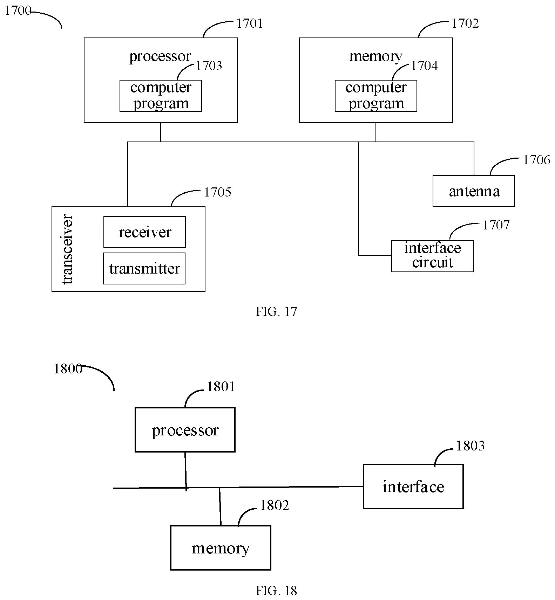

Please refer to FIG. 18, which is a schematic structural diagram of another communication apparatus 1800 provided by an embodiment of the present disclosure. The communication apparatus 1800 may be an access network device, an LMF, or a terminal device, or it may be a chip, a chip system, or a processor that supports the access network device to implement the above method, or it may be a chip, a chip system, or a processor that supports the LMF to implement the above method, or it may be a chip, a chip system, or a processor that supports the terminal device to implement the above method. The device can be used to implement the methods described in the above method embodiments, and for details, refer to the descriptions in the above method embodiments.

The communications apparatus 1800 may include one or more processors 1801. The processor 1801 may be a general purpose processor or a special purpose processor or the like. For example, it can be a baseband processor or a central processing unit. The baseband processor can be used to process communication protocols and communication data, and the central processing unit can be used to control the communication apparatus (such as, a base station, a baseband chip, a terminal device, a terminal device chip, an DU or CU, etc.) and execute computer programs , to process data of the computer programs.

Optionally, the communication apparatus 1700 may further include one or more memories 1702, on which a computer program 1704 may be stored. The processor 1701 executes the computer program 1704, so that the communication apparatus 1700 executes the methods described in the foregoing method embodiments. Optionally, data may also be stored in the memory 1702. The communication apparatus 1700 and the memory 1702 may be set separately or integrated together.

Optionally, the communication apparatus 1700 may further include a transceiver 1705 and an antenna 1706. The transceiver 1705 may be called a transceiver unit, a transceiver, or a transceiver circuit, etc., and is configured to implement a transceiver function. The transceiver 1705 may include a receiver and a transmitter, and the receiver may be called a receiver or a receiving circuit configured to realize a receiving function; the transmitter may be called a transmitter or a transmitting configured to realize a sending function.

Optionally, the communication apparatus 1700 may further include one or more interface circuits 1707. The interface circuit 1707 is configured to receive code instructions and transmit the code instructions to the processor 1701. The processor 1701 runs the code instructions to enable the communication apparatus 1700 to execute the methods described in the foregoing method embodiments.

The communication apparatus 1700 is an access network device: the processor 1701 is configured to execute step 902 in FIG. 9 and so on.

The communication apparatus 1700 is an access network device: the transceiver 1705 is used to execute step 801 in FIG. 8; step 901 in FIG. 9; step 1001 in FIG. 10; step 1001 in FIG. 10, and so on.

The communication apparatus 1700 is a terminal device: the transceiver 1705 is configured to execute step 1201 in FIG. 12; step 1301 in FIG. 13; step 1401 in FIG. 14, and so on.

In an implementation, the processor 1701 may include a transceiver for implementing receiving and sending functions. For example, the transceiver may be a transceiver circuit, or an interface, or an interface circuit. The transceiver circuits, interfaces or interface circuits for implementing the functions of receiving and sending can be separated or integrated together. The above-mentioned transceiver circuit, interface or interface circuit may be used for reading and writing code/data, or the above-mentioned transceiver circuit, interface or interface circuit may be used for signal transmission or transfer.

In an implementation, the processor 1701 may store a computer program 1703, and the computer program 1703 runs on the processor 1701 to enable the communication apparatus 1700 to execute the methods described in the foregoing method embodiments. The computer program 1703 may be embedded in the processor 1701, in which case the processor 1701 may be implemented by hardware.

In an implementation, the communication apparatus 1700 may include a circuit, and the circuit may implement the function of sending or receiving or communicating in the foregoing method embodiments. The processors and transceivers described in the present disclosure may be implemented on integrated circuits (ICs), analog ICs, radio frequency integrated circuits (RFICs), mixed-signal ICs, application specific integrated circuits (ASICs), printed circuit boards (PCB), electronic device, etc. The processor and transceiver can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus described in the above embodiments may be an access network device, or an LMF, or a terminal device, but the scope of the communication apparatus described in the present disclosure is not limited thereto, and the structure of the communication apparatus may not be limited by FIG. 17. The communication apparatus may be a stand-alone device or may be part of a larger device. For example the communication apparatus may be:
(1) a stand-alone IC, a chip, or a chip system or subsystem;
(2) a set of one or more ICs, optionally, the set of ICs may also include storage components for storing data and computer programs;
(3) an ASIC, such as a modem;
(4) a module that can be embedded in other devices;
(5) a receiver, a terminal device, an intelligent terminal device, a cellular phone, a wireless device, a handset, a mobile unit, a vehicle-mounted device, a network device, a cloud device, an artificial intelligence device, etc.;
(6) other devices.

For the case where the communication apparatus may be a chip or a chip system, referring to the schematic structural diagram of the chip shown in FIG. 18. The chip shown in FIG. 18 includes a processor 1801 and an interface 1803. The number of processors 1801 may be one or more, and the number of interfaces 1803 may be more than one.

For the case where the chip is used to implement the function of the LMF in the embodiments of the present disclosure:
the interface 1803 is configured to perform step 201 in FIG. 2; step 301 in FIG. 3; or step 401 in FIG. 4; or step 501, step 502, step 503 in FIG. 5; step 601 in FIG. 6; step 701 in FIG. 7 and so on.

For the case where the chip is used to implement the functions of the access network device in the embodiments of the present disclosure:
the interface 1803 is configured to perform step 801 in FIG. 8; step 901 in FIG. 9; or step 1001 in FIG. 10; step 1001 in FIG. 10; step 1101 in FIG. 11, etc.

For the case where the chip is used to implement the functions of the terminal device in the embodiments of the present disclosure:

The interface 1803 is configured to perform step 1201 in FIG. 12; step 1301 in FIG. 13; step 1401 in FIG. 14; step 1401 in FIG. 14; step 1501 in FIG. 15, etc.

Optionally, the chip further includes a memory 1803, which is configured to store necessary computer programs and data.

Those skilled in the art can also understand that various illustrative logical blocks and steps listed in the embodiments of the present disclosure can be implemented by electronic hardware, computer software, or a combination of both. Whether such functions are implemented by hardware or software depends on the specific application and overall system design requirements. Those skilled in the art may use various methods to implement the described functions for each specific application, but such implementation should not be understood as exceeding the protection scope of the embodiments of the present disclosure.

The present disclosure also provides a readable storage medium on which instructions are stored, and when the instructions are executed by a computer, the functions of any one of the above method embodiments are implemented.

The present disclosure also provides a computer program product, which implements the functions of any one of the above method embodiments when the computer program product is executed by a computer.

In the above embodiments, all or part of them may be implemented by software, hardware, firmware or any combination thereof. When implemented using software, all or part of them may be implemented in the form of a computer program product. The computer program product includes one or more computer programs. When the computer program is loaded and executed on the computer, all or part of the processes or functions according to the embodiments of the present disclosure will be generated. The computer may be a general purpose computer, a special purpose computer, a computer network, or other programmable devices. The computer program may be stored in or sent from one computer-readable storage medium to another computer-readable storage medium, for example, the computer program may be transmitted from a website, computer, server or data center to another website site, computer, server or data center in a wired (such as coaxial cable, optical fiber, digital subscriber line (DSL)) or wireless (such as infrared, wireless, microwave, etc.) manner. The computer-readable storage medium may be any available medium that can be accessed by a computer, or a data storage device such as a server or a data center integrated with one or more available media. The available medium may be a magnetic medium (for example, a floppy disk, a hard disk, a magnetic tape), an optical medium (for example, a high-density digital video disc (digital video disc, DVD)), or a semiconductor medium (for example, a solid state disk (solid state disk, SSD)) etc.

It can be understood that "plurality" in the present disclosure refers to two or more, and other quantifiers are similar. "And/or" describes the association relationship of associated objects, indicating that there may be three types of relationships, for example, A and/or B may indicate: A exists independently, A and B exist simultaneously, and B exists independently. The character "/" generally indicates that the contextual objects are an "or" relationship. The singular forms "a", "an" and "this" are also intended to include the plural unless the context clearly dictates otherwise.

It can be further understood that although operations are described in a specific order in the drawings in the embodiments of the present disclosure, it should not be understood as requiring that these operations be performed in the specific order shown or in a serial order, or that all operations shown be performed to obtain the desired result. In certain circumstances, multitasking and parallel processing may be advantageous.

Those of ordinary skill in the art can understand that the first, second, and other numbers involved in the present disclosure are only for convenience of description, and are not configured to limit the scope of the embodiments of the present disclosure, and also indicate the sequence.

At least one in the present disclosure can also be described as one or more, and more than one can be two, three, four or more, and the present disclosure is not limited. In the embodiments of the present disclosure, for a technical feature, the technical feature is distinguished by "first", "second", "third", "A", "B", "C" and "D", etc. The technical features described with "first", "second", "third", "A", "B", "C" and "D" have no sequence or order of magnitude among the technical features described.

The correspondence shown in each table in the present disclosure may be configured or predefined. The values of the information in each table are just examples, and may be configured as other values, which are not limited in the present disclosure. When configuring the corresponding relationship between the information and each parameter, it is not necessarily required to configure all the corresponding relationships shown in the tables. For example, in the table in the present disclosure, the corresponding relationship shown in some rows may not be configured. For another example, appropriate deformation adjustments can be made based on the above table, for example, splitting, merging, and so on. The names of the parameters shown in the titles of the above tables may also adopt other names understandable by the communication apparatus, and the values or representations of the parameters may also be other values or representations understandable by the communication apparatus. When the above tables are implemented, other data structures can also be used, for example, arrays, queues, containers, stacks, linear tables, pointers, linked lists, trees, graphs, structures, classes, heaps, or hash tables can be used wait.

Predefinition in the present disclosure can be understood as definition, predefinition, storage, pre-storage, pre-negotiation, pre-configuration, curing, or pre-firing.

Those skilled in the art can appreciate that the units and algorithm steps of the examples described in conjunction with the embodiments disclosed herein can be implemented by electronic hardware, or a combination of computer software and electronic hardware. Whether these functions are executed by hardware or software depends on the specific application and design constraints of the technical solution. Skilled artisans may implement the described functionality using different methods for each particular application, but such implementation should not be considered beyond the scope of the present disclosure.

Those skilled in the art can clearly understand that for the convenience and brevity of the description, the specific working process of the above-described system, device and unit can refer to the corresponding process in the foregoing method embodiment, which will not be repeated here.

Other embodiments of the present disclosure will be readily apparent to those skilled in the art from consideration of the specification and practice of the invention disclosed herein. This application is intended to cover any modification, use or adaptation of the present disclosure, and these modifications, uses or adaptations follow the general principles of the present disclosure and include common knowledge or conventional technical means in the technical field not disclosed in the present disclosure. The specification and examples are to be considered exemplary only, with a true scope and spirit of the disclosure being indicated by the following claims.

The above is only a specific implementation of the present disclosure, but the scope of protection of the present disclosure is not limited thereto. Anyone skilled in the art can easily think of changes or substitutions within the technical scope of the present disclosure, which should fall within the protection scope of the present disclosure. Therefore, the protection scope of the present disclosure should be determined by the protection scope of the claims.

## Claims

1. A method for positioning, performed by a core network device, comprising:
interacting with an access network device for validity of an uplink positioning reference signal corresponding to a terminal device;
and/or, interacting with a terminal device for validity of an uplink positioning reference signal via an access network device.

2. The method according to claim 1, wherein interacting with the access network device for the validity of the uplink positioning reference signal, comprises:
receiving first indication information sent by the access network device, wherein the first indication information is configured to indicate information of the validity of the uplink positioning reference signal;
or, sending second indication information to the access network device, wherein the second indication information is configured to indicate time information of the uplink positioning reference signal.

3. The method according to claim 2, wherein receiving the first indication information sent by the access network device comprises:
receiving the first indication information sent by the access network device through a new radio positioning protocol A (NRPPa) positioning information response message;
or, receiving the first indication information sent by the access network device through an NRPPa positioning information update message;
or, receiving the first indication information sent by the access network device through an NRPPa positioning information failure message.

4. The method according to claim 2, wherein the validity of the uplink positioning reference signal comprises any one of:
a timing advance (TA) timer value corresponding to the uplink positioning reference signal;
the uplink positioning reference signal being invalid; or
a valid duration of the uplink positioning reference signal.

5. The method according to claim 4, further comprising:
in response to a time interval between a current moment and a moment of receiving the first indication information being greater than the TA timer value or the valid duration, sending a terminal device uplink positioning reference signal acquisition request to the access network device;
or,
in response to the first indication information indicating the uplink positioning reference signal being invalid, sending a terminal device uplink positioning reference signal acquisition request to the access network device.

6. The method according to claim 2, wherein the time information comprises any one of:
a duration of the uplink positioning reference signal;
a recommended value of a timing advance (TA) timer of the uplink positioning reference signal; or
a reference duration for requesting a measurement result of the uplink positioning reference signal.

7. The method of claim 6, further comprising:
determining the time information according to a time interval between sending an NRPPa positioning information request message and sending an NRPPa measurement result request message.

8. The method according to claim 6 or 7, wherein sending the second indication information to the access network device, comprises:
sending the second indication information to the access network device through the NRPPa positioning information request message.

9. The method according to claim 1, wherein interacting with the terminal device for the validity of the uplink positioning reference signal via the access network device, comprises:
indicating time information of the uplink positioning reference signal to the terminal device via the access network device;
or, receiving information sent by the terminal device for indicating the uplink positioning reference signal being invalid via the access network device.

10. The method according to claim 1, further comprising:
in response to determining that the uplink positioning reference signal is currently valid, sending a measurement result acquisition request for the positioning reference signal to the access network device.

11. A method for positioning, performed by an access network device, comprising:
interacting with a core network device for validity of an uplink positioning reference signal corresponding to a terminal device;
and/or, interacting with a terminal device for validity of an uplink positioning reference signal.

12. The method according to claim 11, wherein interacting with the core network device for the validity of the uplink positioning reference signal, comprises:
sending first indication information to the core network device, wherein the first indication information is configured to indicate information of the validity of the uplink positioning reference signal;
or, receiving second indication information sent by the core network device, wherein the second indication information is configured to indicate time information of the uplink positioning reference signal.

13. The method according to claim 12, wherein sending the first indication information to the core network device comprises:
sending the first indication information to the core network device through an NRPPa positioning information response message;
or, sending the first indication information to the core network device through an NRPPa positioning information update message;
or, sending the first indication information to the core network device through an NRPPa positioning information failure message.

14. The method according to claim 12, wherein the information of the validity of the uplink positioning reference signal comprises any one of:
a TA timer value corresponding to the uplink positioning reference signal;
the uplink positioning reference signal being invalid; or
a valid duration of the uplink positioning reference signal.

15. The method according to claim 12, further comprising:
determining a value of a TA timer corresponding to the terminal device according to the time information.

16. The method according to claim 15, wherein the time information comprises any one of:
a duration of the uplink positioning reference signal;
a recommended value of a timing advance (TA) timer of the uplink positioning reference signal; or
a reference duration for requesting a measurement result of the uplink positioning reference signal.

17. The method according to claim 16, wherein determining the value of the TA timer corresponding to the terminal device according to the time information, comprises:
determining that the value of the TA timer is greater than or equal to the duration of the uplink positioning reference signal;
or, determining that the value of the TA timer is greater than or equal to the recommended value of the TA timer;
or, determining that the value of the TA timer is greater than or equal to the reference duration of the uplink positioning reference signal measurement result.

18. The method according to claim 16 or 17, wherein receiving the second indication information sent by the core network device comprises:
receiving the second indication information sent by the core network device through an NRPPa positioning information request message.

19. The method according to claim 11, wherein interacting with the terminal device for the validity of the uplink positioning reference signal, comprises:
indicating to the terminal device information of the validity of the uplink positioning reference signal;
or, receiving information sent by the terminal device for indicating the uplink positioning reference signal being invalid.

20. The method according to claim 19, wherein receiving the information sent by the terminal device for indicating the uplink positioning reference signal being invalid, comprises:
receiving the information sent by the terminal device for indicating the uplink positioning reference signal being invalid, through a radio resource control (RRC) resume request message.

21. A method for positioning, performed by a terminal device, comprising:
interacting with a network device for validity of an uplink positioning reference signal.

22. The method according to claim 21, wherein interacting with the network device for the validity of the uplink positioning reference signal comprises:
receiving time information of the uplink positioning reference signal sent by a core network device via an access network device;
or, receiving information of the validity of the uplink positioning reference signal sent by an access network device;
or, sending information for indicating the uplink positioning reference signal being invalid to a core network device via an access network device;
or, sending information for indicating the uplink positioning reference signal being invalid to an access network device.

23. The method according to claim 22, wherein sending the information for indicating the uplink positioning reference signal being invalid to the access network device, comprises:
sending the information for indicating the uplink positioning reference signal being invalid to the access network device, through a radio resource control (RRC) resume request message.

24. A communication apparatus, comprising:
a transceiving module, configured to
interact with an access network device for validity of an uplink positioning reference signal corresponding to a terminal device; and/or, interact with a terminal device for validity of an uplink positioning reference signal via an access network device.

25. The apparatus according to claim 24, wherein the transceiving module is specifically configured to:
receive first indication information sent by the access network device, wherein the first indication information is configured to indicate information of the validity of the uplink positioning reference signal;
or, send second indication information to the access network device, wherein the second indication information is configured to indicate time information of the uplink positioning reference signal.

26. The apparatus according to claim 25, wherein the transceiving module is specifically configured to:
receive the first indication information sent by the access network device through a new radio positioning protocol A (NRPPa) positioning information response message;
or, receiving the first indication information sent by the access network device through an NRPPa positioning information update message;
or, receiving the first indication information sent by the access network device through an NRPPa positioning information failure message.

27. The apparatus according to claim 25, further comprising:
a processing module, configured to determine the time information according to a time interval between sending an NRPPa positioning information request message and sending an NRPPa measurement result request message.

28. The apparatus according to claim 24, wherein the transceiving module is further configured to:
send a measurement result acquisition request for the positioning reference signal to the access network device, in response to determining that the uplink positioning reference signal is currently valid.

29. A communication apparatus, comprising:
a transceiving module, configured to interact with a core network device for validity of an uplink positioning reference signal corresponding to a terminal device; and/or, interacting with a terminal device for validity of an uplink positioning reference signal.

30. The apparatus according to claim 29, wherein the transceiving module is specifically configured to:
send first indication information to a core network device, wherein the first indication information is configured to indicate information of the validity of the uplink positioning reference signal;
or, receive second indication information sent by a core network device, wherein the second indication information is configured to indicate time information of the uplink positioning reference signal.

31. The apparatus according to claim 30, wherein the transceiving module is specifically configured to:
send the first indication information to the core network device through an NRPPa positioning information response message;
or, send the first indication information to the core network device through an NRPPa positioning information update message;
or, send the first indication information to the core network device through an NRPPa positioning information failure message.

32. The apparatus according to claim 29, wherein the transceiving module is specifically configured to:
indicate to the terminal device information of the validity of the uplink positioning reference signal; or receive information sent by the terminal device for indicating the uplink positioning reference signal being invalid.

33. The apparatus according to claim 32, wherein the transceiving module is specifically configured to:
receive the information sent by the terminal device for indicating the uplink positioning reference signal being invalid, through a radio resource control (RRC) resume request message.

34. A communication apparatus, comprising:
a transceiving module, configured to interact with a network device for validity of an uplink positioning reference signal.

35. The apparatus according to claim 34, wherein the transceiving module is specifically configured to:
receive time information of the uplink positioning reference signal sent by a core network device via an access network device;
or, receive information of the validity of the uplink positioning reference signal sent by an access network device;
or, send information for indicating the uplink positioning reference signal being invalid to a core network device via an access network device;
or, send information for indicating the uplink positioning reference signal being invalid to an access network device.

36. The apparatus according to claim 35, wherein the transceiving module is specifically configured to:
send the information for indicating the uplink positioning reference signal being invalid to the access network device, through a radio resource control (RRC) resume request message.

37. A communication apparatus, comprising a processor and a memory storing a computer program, wherein when the computer program stored in the memory is executed by the processor, the apparatus is caused to perform the method according to any one of claims 1 to 10.

38. A communication apparatus, comprising a processor and a memory storing a computer program, wherein when the computer program stored in the memory is executed by the processor, the apparatus is caused to perform the method according to any one of claims 11 to 20.

39. A communication apparatus, comprising a processor and a memory storing a computer program, wherein when the computer program stored in the memory is executed by the processor, the apparatus is caused to perform the method according to any one of claims 21 to 23.

40. A computer-readable storage medium having stored thereon instructions, when being executed, enable the method according to any one of claims 1-10 to be implemented.

41. A computer-readable storage medium having stored thereon instructions, when being executed, enable the method according to any one of claims 11-20 to be implemented.

42. A computer-readable storage medium having stored thereon instructions, when being executed, enable the method according to any one of claims 21-23 to be implemented.
